# EUROPEAN PATENT SPECIFICATION

(11) **EP 1 906 546 B1**
(45) Date of publication and mention of the grant of the patent: **12.12.2012**
(21) Application number: 06804978.2
(22) Date of filing: 18.10.2006
(51) Int. Cl.: H04M 3/22, H04M 3/00, H04M 7/00, H04M 3/30

(54) **A BROAD-NARROW BAND INTEGRATED BOARD AND METHOD FOR TESTING SAID BOARD**
EIN BREIT-SCHMALBAND INTEGRIERTER SCHALTKREIS UND PRÜFUNGSVERFAHREN EINES SOLCHEN SCHALTKREISES
CARTE À CIRCUIT INTÉGRÉ À BANDE LARGE-BANDE ÉTROITE ET PROCÉDÉ DE TEST DE LADITE CARTE À CIRCUIT INTÉGRÉ

(30) Priority: 20.12.2005 CN 200510121064
(43) Date of publication of application: 02.04.2008
(73) Proprietor: Huawei Technologies Co., Ltd., Longgang District, Shenzhen Guangdong 518129 (CN)
(72) Inventor: XIAO, Ruijie, Guangdong 518129 (CN); ZHANG, Wei, Guangdong 518129 (CN); LI, Xiaodong, Guangdong 518129 (CN); XIAN, Jingshan, Guangdong 518129 (CN); MA, Jun, Guangdong 518129 (CN)
(74) Representative: Körber, Martin Hans
(86) International application number: PCT/CN2006/002760
(87) International publication number: WO 2007/071146

(56) References cited:
- EP-A- 1 202 541
- CN-A- 1 260 654
- CN-A- 1 516 481
- CN-A- 1 658 580
- CN-A- 1 674 458
- US-A1- 2003 147 507
- US-B1- 6 785 325

## Description

### Field of the Technology

The present invention relates to Internet technologies, and particularly, to a broadband-narrowband integrated board and a method for testing the board.

### Background of the Invention

With the Asymmetric Digital Subscriber Line (ADSL) access technology, a telephone service and a broadband service may be transferred in a twisted pair simultaneously. When a signal sent by a user terminal is transferred to a switching network to be switched, the narrowband signal and the broadband signal in the line are to be separated from each other and then respectively transferred to the Public Switched Telephone Network (PSTN) and the Internet to be switched. On the other end of the network, the narrowband service and the broadband service are combined and transferred to the user terminal.

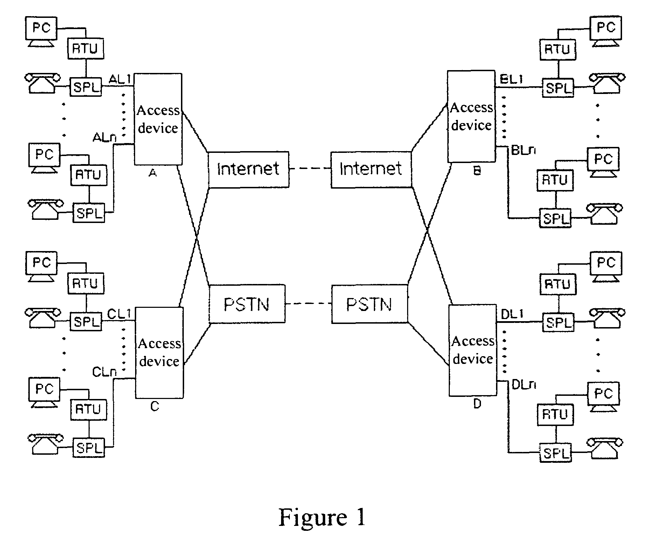

The above process is shown in Fig.1. As shown in Fig.1, a user at End AL1 is to call another user at End BLn to launch a narrowband service, and meanwhile, the computer at End AL1 is to perform network data interworking with the computer at End DL1 to launch a broadband service, the signal outputted by the computer at End AL1 passes a Remote Terminal Unit (RTU), i.e. the so-called modem, and is combined with the telephone signal by a Splitter (SPL) to generate a broadband narrowband hybrid signal. The broadband narrowband hybrid signal is transferred to an access device A, and then the access device A separates the broadband narrowband hybrid signal of End AL1. The broadband signal is transferred to the Internet to be switched and routed, reaches another access device D at End DL1 as the destination, and is transferred to the subscriber line of End DL1 after being combined with the narrowband signal transferred to End DL1 in the access device D, and thus the broadband signal reaches the computer at End DL1. The narrowband signal is transferred to and switched in the PSTN, and is transferred to a third access device B at End BLn as the destination; the narrowband signal is transferred to the subscriber line of End BLn after being combined with the broadband signal transferred to End BLn in the access device B, and reaches the telephone at End BLn after being separated by the SPL. Thus the call to the telephone at End BLn may be put through.

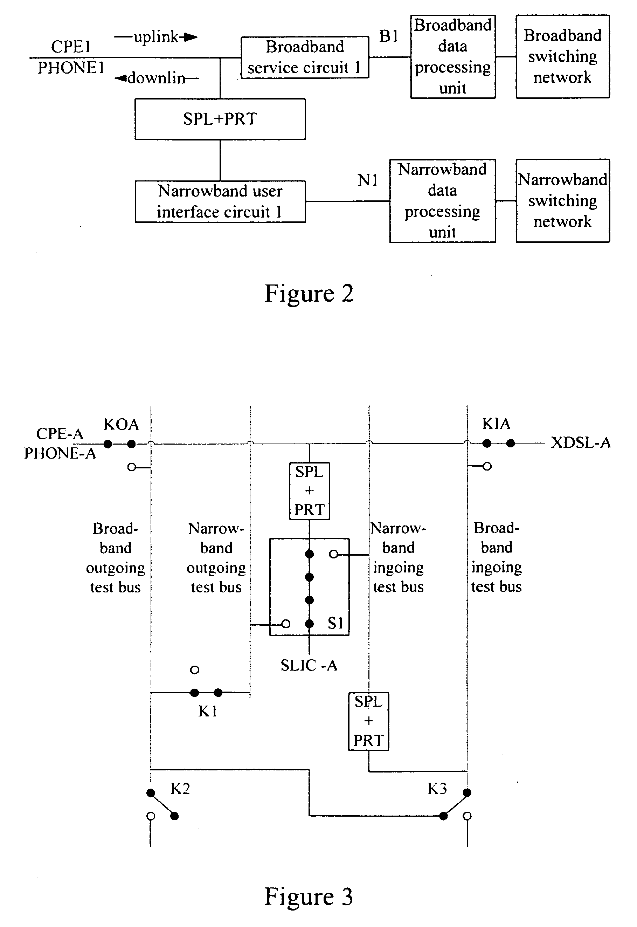

A service board used in an access device and adopted to handle a broadband service and a narrowband service simultaneously is called a broadband-narrowband integrated board, or an integrated board for short. Fig.2 shows a block diagram illustrating a structure of the integrated board. Each board can support services of multiple subscriber lines in general. However, only the service of one subscriber line in the integrated board is shown in Fig.2. In an uplink direction, the integrated board first handles the hybrid signal containing a broadband signal denoted as CPE1 and a narrowband signal denoted as PHONE1 sent from the user terminal of subscriber line 1. The narrowband signal is separated from the hybrid signal by the SPL, and is sent in sequence to a narrowband user interface circuit 1, a narrowband data processing unit and the narrowband switching network; the broadband signal is sent to the broadband switching network through a broadband service circuit 1 and a broadband data processing unit. It is to be noted that all the subscriber lines supported by an integrated board share one broadband data processing unit and one narrowband data processing unit.

The operation performed by the integrated board in a downlink direction is opposite to that in the uplink direction. The broadband data processing unit distributes data from the broadband switching network to a requested subscriber line; the narrowband data processing unit distributes data from the narrowband switching network to a requested subscriber line. The broadband signal B1 and the narrowband signal N1 of the first subscriber line are combined by the SPL and transferred to the subscriber line 1.

As can be seen in Fig.2, an integrated board corresponds to a signal transit board. The integrated board separates the broadband signal and the narrowband signal from the subscriber line from each other, and respectively sends the broadband signal and narrowband signal to the respective switching networks; the integrated board also combines and pairs up the broadband signal and the narrowband signal from the respective switching networks as demanded and then sends the combined signal to the subscriber line.

The operation status of an integrated board needs to be tested frequently since the integrated board plays an important role in the circuitry. An ordinary test method includes connecting the signal to be tested to a dedicated test bus, and testing the signal with a dedicated test board or a dedicated test device connected to the test bus. In general, the test for the signal from the subscriber line is called an outgoing test, while the test for the signal from the switching network is called an ingoing test. In the case that the narrowband path is disconnected completely and the test is only performed for the broadband signal, the test is called a net broadband test access. The broadband outgoing test in accordance with the prior art affects the narrowband signal, and as a result, the narrowband signal is interrupted. Meanwhile, the narrowband ingoing test cannot be performed in accordance with the prior art.

In addition, the X Digital Subscriber Line (XDSL) service is performed in the telephone line. For a narrowband service, each telephone corresponds to one narrowband processing circuit in the narrowband data processing unit, and the number of a telephone is changed if the narrowband processing circuit connected with the telephone is changed. Therefore, the narrowband processing circuit is not required to be changed when a broadband backup is performed. For a broadband service, when the broadband path malfunctions, the connection path is to be switched so as to ensure the continuity of the service. As shown in Fig.2, in a normal condition, in the first subscriber line (CPE1+PHONE1), the broadband service circuit 1 and the narrowband user interface circuit 1 respectively provide the broadband service and the narrowband service. When the broadband service circuit 1 malfunctions and cannot provide the broadband service, for continuing with the broadband service, the broadband service circuit 1 is to be replaced by another broadband service circuit to provide the broadband service to the first subscriber line. The process is called the broadband backup. The broadband backup in the prior art may result in the interruption of the narrowband signal of the original port.

Document D1 discloses a circuit for testing POTS service on a shared POTS/DSL carrier. The circuit is configured to facilitate testing of the POTS service using an insertion point that is between the DSL filter and the subscriber loop in a manner that is transparent to subscribers.

Document D2 discloses a relay matrix utilized in a metallic test access systems of DSLAMs, which is used to test the physical disconnection or reconnection of each of the local loops (users).

Document D3 discloses a DSL splitter providing test access to an interconnected subscriber loop. The DSL splitter in a first test mode provides access to allow testing of an interconnected subscriber loop by way of a DSL input. A disconnection in series with an associated low pass filter (LPF) disconnects POTS input. Such a splitter may similarly provide access to allow testing of the subscriber loop by way of the POTS input in a second test mode. In this second test mode, a by-pass by-passes the LPF, and a disconnection may disconnect an associated high pass filter (HPF) and DSL input.

### Summary of the Invention

The present invention provides a broadband-narrowband integrated board and method for testing the board.

A broadband-narrowband integrated board according to claim 1.

A method for testing a broadband-narrowband integrated board according to claim 4:
Thorough test may be performed for a broadband-narrowband integrated board using the broadband-narrowband integrated board and the method for testing the board provided by the present invention. Meanwhile, other signals are not affected when one line of signal is being tested. Moreover, the narrowband signal will not be affected when the broadband-narrowband integrated board provided by the present invention is used to perform broadband backup. In addition, the narrowband ingoing test can be performed.

### Brief Description of the Drawings

Fig.1 shows a schematic diagram illustrating the structure of an XDSL broadband access system in accordance with the prior art;
Fig.2 shows a block diagram illustrating the functional structure of a broadband-narrowband integrated board in accordance with the prior art;
Fig.3 shows a schematic diagram illustrating the service when a broadband-narrowband integrated board in accordance with the present invention is in normal operation;
Fig.4 shows a schematic diagram illustrating the service when a broadband-narrowband integrated board in accordance with the present invention is under a broadband outgoing test;
Fig.5 shows a schematic diagram illustrating the service when a broadband-narrowband integrated board in accordance with the present invention is under a broadband ingoing test;
Fig.6 shows a schematic diagram illustrating the service when a broadband-narrowband integrated board in accordance with the present invention is under a net broadband outgoing test access;
Fig.7 shows a schematic diagram illustrating the service when a broadband-narrowband integrated board in accordance with the present invention is under a narrowband outgoing test;
Fig.8 shows a schematic diagram illustrating the service when a broadband-narrowband integrated board in accordance with the present invention is under a narrowband ingoing test;
Fig.9 shows a schematic diagram illustrating the service when a broadband-narrowband integrated board in accordance with the present invention is used to perform broadband backup;
Fig.10 shows a schematic diagram illustrating the service when a broadband-narrowband integrated board in accordance with the present invention is under a broadband ingoing test and a broadband outgoing test simultaneously.

### Embodiments of the Invention

The present invention is hereinafter described in detail with reference to embodiments and the drawings so as to make the objective, the technical solutions and the advantages of the present invention clearer.

Fig.3 shows a schematic diagram illustrating the service when a broadband-narrowband integrated board in accordance with the present invention is in normal operation.

In Fig.3 "A" denotes any of the subscriber lines on the integrated board, the CPE / PHONE end is connected to a user equipment, the XDSL end is the broadband interface and is connected to the broadband switching network, the Subscriber Line Interface Circuit (SLIC) terminal is connected to the narrowband switching network.

A broadband outgoing test switch, i.e. the first switching device, which is denoted as KOA in the A^{th} subscriber line, is provided at the CPE / PHONE end of the subscriber line. A broadband ingoing test switch, i.e. the second switching device, which is denoted as KIA in the A^{th} subscriber line, is provided at the XDSL end of the subscriber line. The normally open contact of KOA is connected to a broadband outgoing test bus, the normally closed contact of KOA is connected to the normally closed contact of KIA, and the normally open contact of KIA is connected to a broadband ingoing test bus. The two switches are used for transferring a signal in the subscriber line to the broadband ingoing test bus or the broadband outgoing test bus.

Two switches in series are connected between the SLIC end of the subscriber line and the subscriber line splitter and protection circuit (SPL+PRT); the two switches are respectively called the narrowband ingoing test switch and the narrowband outgoing test switch. The narrowband ingoing test switch corresponds to a fourth switching device, which has a normally open contact connected to a narrowband ingoing test bus and a normally closed contact connected to the network end of the subscriber line splitter and protection circuit, i.e. the PRT portion. The narrowband outgoing test switch corresponds to a seventh switching device, which has a normally open contact connected to a narrowband outgoing test bus and a normally closed contact connected to the SLIC-A end. The narrowband ingoing test switch is connected with the narrowband outgoing test switch. The two switches are used for transferring a narrowband signal to the narrowband outgoing test bus or the narrowband ingoing test bus as needed. The user end of the subscriber line splitter and protection circuit, i.e. the SPL portion, is connected to the subscriber line; the network end of a measuring splitter and protection circuit, i.e. the PRT portion, is connected to the normally closed contact of the narrowband ingoing test switch.

In addition, three switches, K1, K2 and K3, respectively corresponding to a sixth switching device, eighth switching device and third switching device, are set as auxiliary switches for the outgoing test and the ingoing test. The auxiliary switch, K1, is located in the narrowband outgoing test bus; the normally open contact of K1 is not connected, and the normally closed contact of K1 is connected to the broadband outgoing test bus. The auxiliary switch, K2, is located in the broadband outgoing test bus; the normally closed contact of K2 is not connected, and the normally open contact of K2 is connected to a test device. The auxiliary switch, K3, is located in the broadband ingoing test bus; the normally closed contact of K3 is connected to the broadband outgoing test bus, and the normally open contact of K3 is connected to the test device.

The measuring splitter and protection circuit is also connected to the narrowband ingoing test bus; the user end of the measuring splitter and protection circuit, i.e. the SPL portion, is connected to the broadband ingoing test bus, and the network end of the measuring splitter and protection circuit, i.e. the PRT portion, is connected to the narrowband ingoing test bus.

The above switching devices and the measuring splitter and protection circuit compose a switching device matrix. Preferably, the above switches may be implemented as relays. Specially, the narrowband outgoing test switch and the narrowband ingoing test switch may be integrated into one solid relay, which has a much smaller size than a mechanical relay.

All the switches are in the normally closed positions in normal operation. Therefore the subscriber line is disconnected from all the test buses, and the broadband outgoing test bus, the narrowband outgoing test bus, the narrowband ingoing test bus and the broadband ingoing test bus are connected to each other. For an uplink service, the broadband component of the signal having entered the integrated board from the CPE-A / PHONE-A end is directly transferred to the broadband switching network through the XDSL-A end, while the narrowband component of the signal is transferred to the PSTN after passing in sequence through the subscriber line splitter and protection circuit and the SLIC-A end. For a downlink service, the narrowband signal having entered the integrated board from the PSTN passes the SPL, and is combined with the broadband signal having entered the integrated board from the broadband switching network. The combined signal is transferred to the CPE-A / PHONE-A end of the subscriber line.

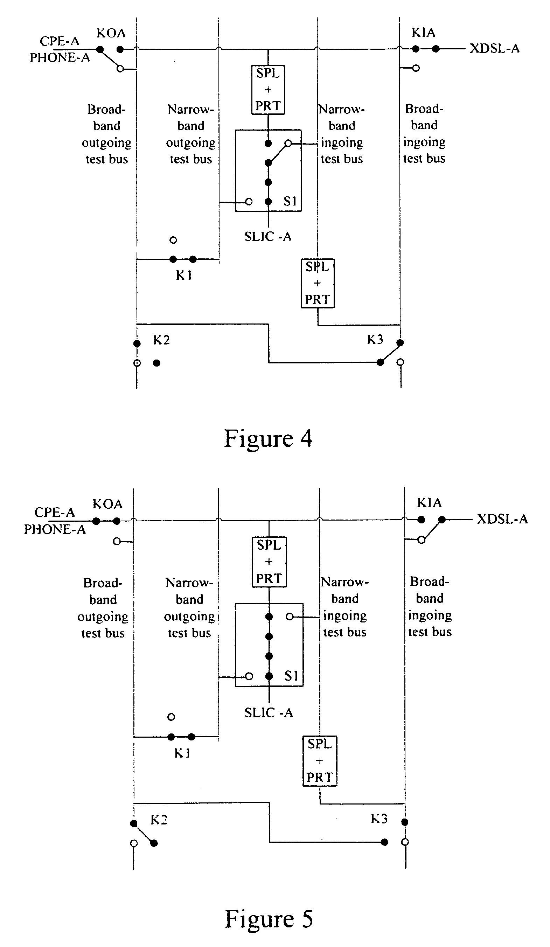

Fig.4 shows a schematic diagram illustrating the service when a broadband-narrowband integrated board in accordance with the present invention is under a broadband outgoing test.

When the broadband outgoing test is to be performed, the broadband outgoing test switch KOA, the auxiliary switch K2, and the narrowband ingoing test switch of the solid relay S 1 are made to act, that is, these switches are made respectively to turn to the normally open positions. Thus, the broadband outgoing test bus is connected to the CPE-A / PHONE-A end, which enables the outgoing test for the broadband signal in the signal entering the integrated board from the CPE-A / PHONE-A end. The narrowband signal in the signal entering the integrated board from the CPE-A /PHONE-A end passes the broadband outgoing test bus, K2, K3, the measuring splitter and protection circuit, the narrowband ingoing test bus and the solid relay in turn, and eventually is still connected to the SLIC-A end. Thus, the narrowband service is not affected.

Fig.5 shows a schematic diagram illustrating the service when a broadband-narrowband integrated board in accordance with the present invention is under a broadband ingoing test.

When the broadband ingoing test is to be performed, the broadband ingoing test switch KIA and the auxiliary switch K3 are made to act, that is, the two switches are made respectively turn to the normally open positions. Thus, the broadband ingoing test bus is connected to the XDSL-A end, which enables the ingoing test for the broadband signal entering the integrated board from the XDSL-A end. The narrowband signal of the A^{th} subscriber line still enters the integrated board from the SLIC-A end, passes the solid relay S1, the subscriber line splitter and protection circuit and broadband outgoing test switch KOA in sequence, and is sent to the user through the CPE-A / PHONE-A end. Thus, the narrowband service is not affected.

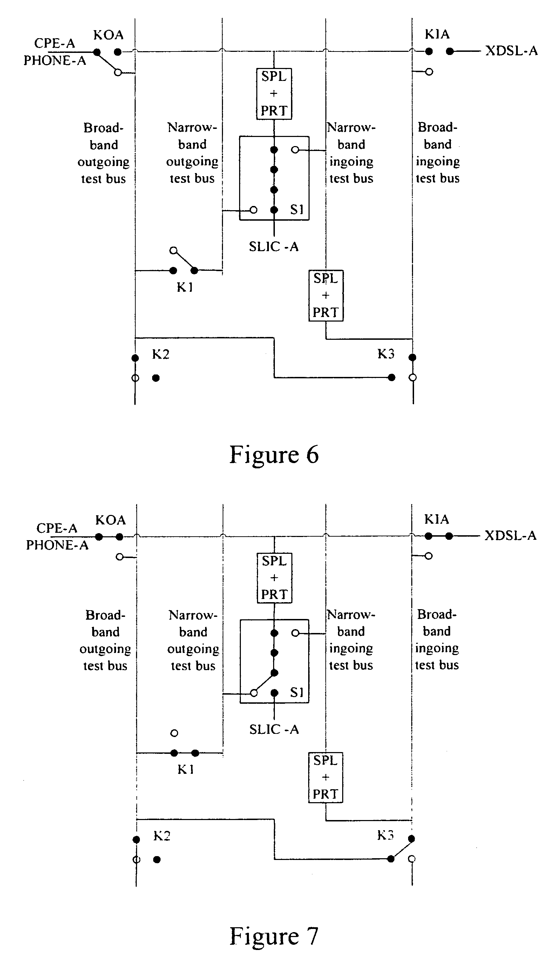

Fig.6 shows a schematic diagram illustrating the service when a net broadband outgoing test access is performed for a broadband-narrowband integrated board in accordance with the present invention.

When the net broadband outgoing test access is to be performed, the broadband outgoing test switch KOA and the auxiliary switches K1, K2, and K3 are made respectively turn to the normally open positions. Thus, the broadband outgoing test bus is connected to the A^{th} subscriber line, which enables the outgoing test for the broadband signal in the A^{th} subscriber line. There is no path for transferring the narrowband signal in the A^{th} subscriber line to the SLIC-A end, and thus the narrowband service is disconnected completely. Therefore, the net broadband outgoing test access may be performed.

Fig.7 shows a schematic diagram illustrating the service when a broadband-narrowband integrated board in accordance with the present invention is under a narrowband outgoing test.

When the narrowband outgoing test is to be performed, the auxiliary switch K2 and the narrowband outgoing test switch of the solid relay S1, are made to act, that is, the switches are made respectively turn to the normally open positions. Thus, the path for broadband services is not changed, that is, the broadband services are not changed. The narrowband signal in the A^{th} subscriber line is transferred to the narrowband outgoing test bus and then to the broadband outgoing test bus, and thus the narrowband signal at the CPE-A / PHONE-A end may be tested through the broadband outgoing test bus.

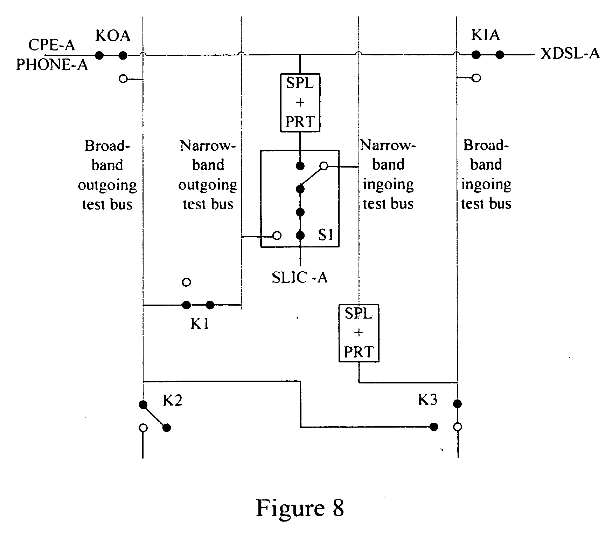

Fig.8 shows a schematic diagram illustrating the service when a broadband-narrowband integrated board in accordance with the present invention is under a narrowband ingoing test.

When the narrowband ingoing test is to be performed, the auxiliary switch K3 and the narrowband ingoing test switch of the solid relay S1 are made to act, that is, the switches are made respectively turn to the normally open positions. Thus, the path for broadband services is not changed, that is, the broadband services are not changed. The narrowband signal entering the integrated board from the SLIC-A end is transferred via the solid relay to the narrowband ingoing test bus and in turn to the broadband ingoing test bus; thus the narrowband signal at the SLIC-A end may be tested through the broadband ingoing test bus.

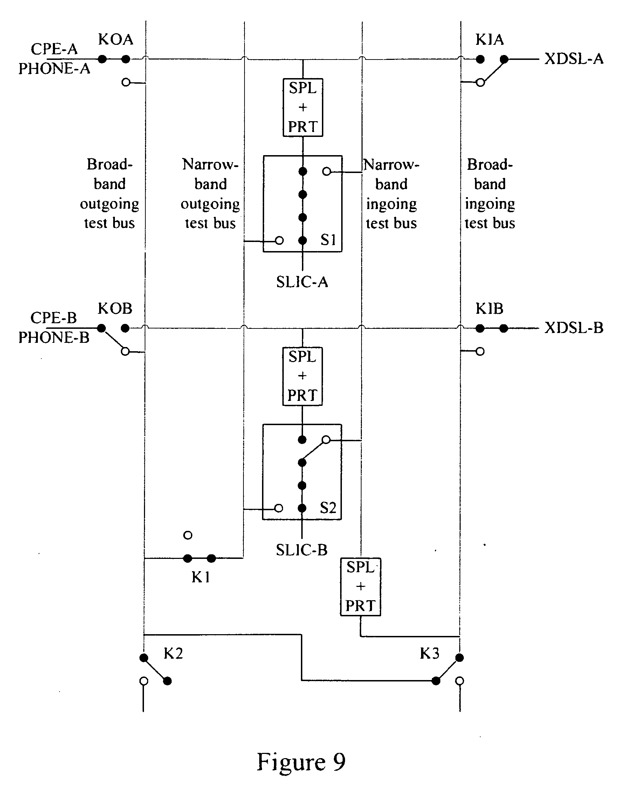

Fig.9 shows a schematic diagram illustrating the service when a broadband-narrowband integrated board in accordance with the present invention is used to perform broadband backup.

When the XDSL-B port malfunctions and cannot provide a broadband service, for continuing with the broadband service of the B^{th} subscriber line, the XDSL-B port is to be replaced by another broadband port to provide the broadband service to the B^{th} subscriber line. It is supposed that the XDSL-A port accomplishes the backup task in Fig.9. In this case, the broadband outgoing test switch KOB, the broadband ingoing test switch KIA and the narrowband ingoing test switch of the solid relay S2, are made to act, that is, the switches are made respectively turn to the normally open positions. Thus, the broadband signal from the XDSL-A end is transferred to the CPE-B / PHONE-B end through the broadband ingoing test switch KIA, the broadband ingoing test bus, the auxiliary switches K3 and K2, the broadband outgoing test bus and the broadband outgoing test switch KOB, which keeps the connection of the broadband service of the B^{th} subscriber line. The narrowband signal at the SLIC-B end is transferred to the CPE-B / PHONE-B end through the solid relay S2, the narrowband ingoing test bus, the measuring splitter and protection circuit, the auxiliary switches K3 and K2, and the broadband outgoing test bus, and thus the narrowband service of the B^{th} subscriber line is kept.

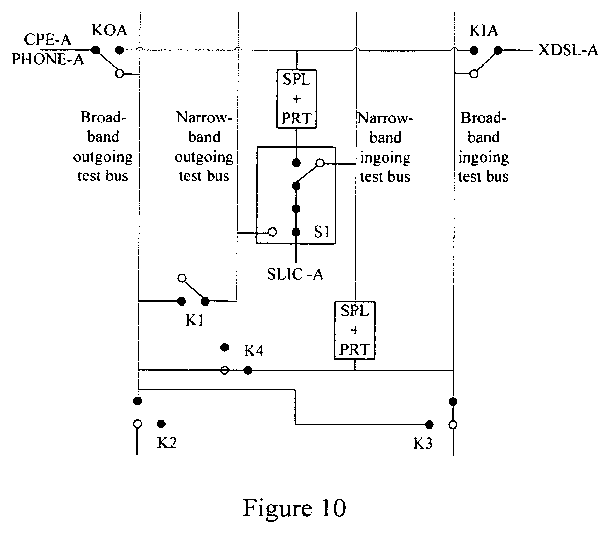

Fig.10 shows a schematic diagram illustrating the service when a broadband-narrowband integrated board in accordance with the present invention is under a broadband ingoing test and a broadband outgoing test simultaneously.

For performing simultaneously the broadband outgoing test and the broadband ingoing test without affecting the narrowband service, the connection between the broadband outgoing test bus and the user end of the measuring splitter and protection circuit is to be kept, which may be implemented by directly connecting the broadband outgoing test bus to the user end of the measuring splitter and protection circuit. For implementing the services respectively shown in Figs.3-9, the broadband outgoing test bus and the user end of the measuring splitter and protection circuit may be connected with an auxiliary switch K4, i.e. the fifth switching device. The auxiliary switch K4, is located at the user end of the measuring splitter and protection circuit, the normally open contact of the auxiliary switch K4 is connected to the broadband outgoing test bus, and the normally closed contact of the auxiliary switch K4 is not connected.

When the broadband outgoing test and the broadband ingoing test are performed simultaneously, the broadband outgoing test switch KOA, the broadband ingoing test switch KIA and the auxiliary switches K2 and K3, are made to act, that is, the switches are made respectively turn to the normally open positions,. Thus, the broadband signal from the CPE-A / PHONE-A end is transferred to the outgoing test bus while the broadband signal from the XDSL-A end is transferred to the ingoing test bus. Thereby, the broadband outgoing test and the broadband ingoing test may be performed simultaneously. At the same time, the auxiliary switch K4 and the narrowband ingoing test switch of the solid relay S1, are made respectively turn to the normally open positions. Thus, the CPE-A / PHONE-A end is connected to the SLIC-A end through the broadband outgoing test switch KOA, the broadband outgoing test bus, the auxiliary switch K4, the measuring splitter and protection circuit, the narrowband ingoing test bus and the solid relay, and the connection of the narrowband service is kept. When the functions respectively shown in Figs.3 and 9 are to be implemented, the auxiliary switch K4 is made turn to the normally closed position.

It is to be noted that in the above description, it is guaranteed that all the switches are in the normally open positions when the broadband-narrowband integrated board operates normally. If it is not required that all the switches be in the normally open positions when the broadband-narrowband integrated board operates normally, the connection relation between the contacts of the switches may be changed as long as it is ensured that the connection relation between the subscriber line and the test buses is the same as that described above when various functions are to be implemented.

The present invention also provides a method for testing the broadband-narrowband integrated board corresponding to the above broadband-narrowband integrated board with the test function. The method includes the following processes.
Step a: setting test buses and a switching device matrix on the broadband-narrowband integrated board;
Step b: selectively connecting the test buses to the subscriber line using the switching device matrix as demanded, so as to make a service signal to be tested enter the test bus and to form a path for a service not to be tested;
Step c: testing the signal to be tested through the test bus.

The test buses include a broadband outgoing test bus, a broadband ingoing test bus, a narrowband outgoing test bus and a narrowband ingoing test bus.

The process of setting the switching device matrix includes the following.

A broadband outgoing test switch KOA is set at the CPE / PHONE end of the subscriber line; and a broadband ingoing test switch KIA is set at the XDSL end of the subscriber line. The normally open contact of KOA is connected to the broadband outgoing test bus, the normally closed contact of KOA is connected to the normally closed contact of KIA, and the normally open contact of KIA is connected to the broadband ingoing test bus.

Two switches in series are set between the SLIC end of the subscriber line and the subscriber line splitter and protection circuit, and are respectively called as a narrowband ingoing test switch and a narrowband outgoing test switch. The normally open contact of the narrowband ingoing test switch is connected to the narrowband ingoing test bus while the normally closed contact of the narrowband ingoing test switch is connected to the network end of the subscriber line splitter and protection circuit, i.e. the PRT portion. The normally open contact of the narrowband outgoing test switch is connected to the narrowband outgoing test bus while the normally closed contact of the narrowband outgoing test switch is connected to the SLIC-A end. The narrowband ingoing test switch is connected to the narrowband outgoing test switch. Preferably, the narrowband outgoing test switch and the narrowband ingoing test switch may be integrated into one solid relay.

An auxiliary switch K1 is set in the narrowband outgoing test bus. The normally open contact of K1 is not connected, and the normally closed contact of K1 is connected to the broadband outgoing test bus. An auxiliary switch K2 is set in the broadband outgoing test bus, the normally closed contact of K2 is not connected, and the normally open contact of K2 is connected to a test device. An auxiliary switch K3 is set in the broadband ingoing test bus, the normally closed contact of K3 is connected to the broadband outgoing test bus, and the normally open contact of K3 is connected to the test device.

A measuring splitter and protection circuit is set in the narrowband ingoing test bus, the user end of the SPL+PRT, i.e. the SPL portion, is connected to the broadband ingoing test bus, and the network end of the SPL+PRT, i.e. the PRT portion, is connected to the narrowband ingoing test bus.

If the service signal to be tested is a broadband uplink signal, that is, the broadband outgoing test is to be performed for the integrated board, the broadband outgoing test switch KOA, the auxiliary switch K2 and the narrowband ingoing test switch of the solid relay S1, are made to act, that is, the switches are made turn to the normally open positions. Thereby, the broadband uplink signal enters the test device through the broadband outgoing test bus. Meanwhile, the broadband outgoing test bus and the narrowband ingoing test bus are connected through the measuring splitter and protection circuit; the network end of the measuring splitter and protection circuit is connected to the narrowband ingoing test bus and user end of the measuring splitter and protection circuit is connected to the broadband outgoing test bus. Moreover, the narrowband ingoing test bus is connected to the SLIC. Thus, the path for narrowband services is formed.

If the service signal to be tested is a broadband downlink signal, that is, the broadband ingoing test is to be performed for the integrated board, the broadband ingoing test switch KIA and the auxiliary switch K3 are made to act, that is, the switches are made turn to the normally open positions. Thereby, the broadband downlink signal enters the test device through the broadband ingoing test bus. Meanwhile, the path for narrowband services in normal operation is used continuously to perform the narrowband service.

When the net broadband outgoing test access is to be performed for the integrated board, the broadband outgoing test switch KOA and the auxiliary switches K1, K2, and K3 are made turn to the normally open positions. Thereby, the broadband uplink signal enters the test device through the broadband outgoing test bus. Meanwhile, the narrowband service is disconnected as required in net broadband outgoing test access.

If the service signal to be tested is a narrowband uplink signal, that is, the narrowband outgoing test is to be performed for the integrated board, the auxiliary switch K2 and the narrowband outgoing test switch of the solid relay S1 are made to act, that is, the switches are made turn to the normally open positions. Thus, the narrowband outgoing test bus is connected to the broadband outgoing test bus; the narrowband uplink signal enters the test device through the narrowband outgoing test bus and the broadband outgoing test bus. Meanwhile, the path for broadband services in normal operation is used continuously to perform the broadband service.

If the service signal to be tested is a narrowband downlink signal, that is, the narrowband ingoing test is to be performed for the integrated board, the auxiliary switch K3 and the narrowband ingoing test switch of the solid relay S 1 are made to act, that is, the switches are made turn to the normally open positions. Thus, the narrowband ingoing test bus and the broadband ingoing test bus are connected to each other by the measuring splitter and protection circuit; the user end of the measuring splitter and protection circuit is connected to the broadband ingoing test bus, and network end of the measuring splitter and protection circuit is connected to the narrowband ingoing test bus. Moreover, the SLIC is connected to the narrowband ingoing test bus and thus the narrowband downlink signal enters the test device through the narrowband ingoing test bus, the measuring splitter and protection circuit and the broadband ingoing test bus. Meanwhile, the path for broadband services in normal operation is used continuously to perform the broadband service.

If the service signal to be tested contains the broadband downlink signal and the broadband uplink signal, the broadband uplink signal and broadband downlink signal are to enter the test device respectively through the broadband outgoing test bus and the broadband ingoing test bus. Meanwhile, the broadband ingoing test bus and the narrowband ingoing test bus are connected through the measuring splitter and protection circuit: the user end of the measuring splitter and protection circuit is connected to the broadband ingoing test bus and the network end of the measuring splitter and protection circuit is connected to the narrowband ingoing test bus. The user end of the measuring splitter and protection circuit is also connected to the broadband outgoing test bus. The SLIC is connected to the narrowband ingoing test bus. Thus, the path for narrowband services is formed.

The user end of the measuring splitter and protection circuit may be connected to the broadband outgoing test bus directly or via an auxiliary switch K4. The auxiliary switch K4 is set at the user end of the measuring splitter and protection circuit and has a normally open contact connected to the broadband outgoing test bus and a normally closed contact not connected.

Thus, if the service signal to be tested contains the broadband downlink signal and the broadband uplink signal, for implementing the above connection relation, the broadband outgoing test switch KOA, the broadband ingoing test switch KIA, the narrowband ingoing test switch of the solid relay S1 and the auxiliary switches K2, K3 and K4 are made to act, that is, the switches are made turn to the normally open positions. Moreover, the auxiliary switch K4 is kept in the normally closed position when a normal service is being performed or a signal to be tested does not contain both the broadband downlink signal and the broadband uplink signal at the same time.

If the broadband interface of the original subscriber line malfunctions after the process a, the broadband interface of a backup subscriber line is used to keep on providing the broadband service to the original subscriber line. It is assumed that the broadband outgoing test switch of the original subscriber line is KOB, and the solid relay between the SLIC end of the original subscriber line and the subscriber line splitter and protection circuit of the original subscriber line is S2.

KOB, KIA and the narrowband ingoing test switch of the solid relay S2 are made turn to the normally open positions so that, the broadband interface of the backup subscriber line is connected to the broadband ingoing test bus, the CPE/PHONE end of the original subscriber line is connected to the broadband outgoing test bus, and the broadband ingoing test bus is connected to the broadband outgoing test bus, and thus a new broadband service path is formed; meanwhile, the narrowband ingoing test bus is connected to the broadband ingoing test bus by the measuring splitter and protection circuit, where the user end of the measuring splitter and protection circuit is connected to the broadband ingoing test bus and the network end of the measuring splitter and protection circuit is connected to the narrowband ingoing test bus, and the SLIC of the original subscriber line is connected to the narrowband ingoing test bus, and thus a new narrowband service path is formed.

The foregoing is only preferred embodiments of the present invention and is not for use in limiting the protection scope thereof. Any modification, equivalent substitution, and improvement without departing from the principle of the present invention should be covered in the protection scope of the present invention.

## Claims

1. A broadband-narrowband integrated board, comprising:
a test bus for connecting a service signal to a test device; and
a switching device matrix for connecting the test bus to a subscriber line so as to make a service signal, which is either a broadband signal or a narrowband signal, to be tested enter the test bus
**characterized in that**
the test bus comprises:
a broadband outgoing test bus, a broadband ingoing test bus, a narrowband outgoing test bus and a narrowband ingoing test bus and
that the switching device matrix comprises:
a first switching device (KOA) connected to a user terminal, wherein a normally open contact thereof is connected to the broadband outgoing test bus, and a normally closed contact thereof is connected to a normally closed contact of a second switching device (KIA);
the second switching device (KIA) connected to a broadband interface, wherein a normally open contact thereof is connected to the broadband ingoing test bus;
a third switching device (K3) connected to the broadband ingoing test bus, wherein a normally open contact thereof is connected to the test device and a normally closed contact thereof is connected to the broadband outgoing test bus;
a fourth switching device connected to a seventh switching device, wherein a normally open contact thereof is connected to the narrowband ingoing test bus and a normally closed contact thereof is connected to a subscriber line splitter and protection circuit;
sixth switching device (K1) connected to the narrowband test bus, wherein a normally open contact thereof is not connected and a normally closed contact thereof is connected to the broadband outgoing test bus;
the seventh switching device, wherein a normally open contact thereof is connected to the narrowband outgoing test bus and a normally closed contact thereof is connected to a Subscriber Line Interface Circuit;
an eighth switching device (K2) connected to the broadband outgoing test bus, wherein a normally open contact thereof is connected to the test device and a normally closed contact thereof is not connected;
a measuring splitter and protection circuit, wherein a user end thereof is connected to the broadband ingoing test bus and a network end thereof is connected to the narrowband ingoing test bus.

2. The broadband-narrowband integrated board of Claim 1, further comprising:
a fifth switching device connected to the user end of the measuring splitter and protection circuit, wherein a normally open contact thereof is connected to the broadband outgoing test bus and a normally closed contact thereof is not connected.

3. The broadband-narrowband integrated board of Claim 1 or 2, wherein the fourth switching device and the seventh switching device are integrated as a solid relay.

4. A method for testing a broadband-narrowband integrated board, comprising:
setting a test bus and a switching device matrix on the broadband-narrowband integrated board;
selectively connecting the test bus to a subscriber line using the switching device matrix, so as to make a service signal, which is either a broadband signal or a narrowband signal, to be tested enter the test bus; and
testing the signal to be tested through the test bus
**characterized in that**
the process of setting the test bus on the broadband-narrowband integrated board comprises:
setting a broadband outgoing test bus, a broadband ingoing test bus, a narrowband outgoing test bus and a narrowband ingoing test bus on the broadband-narrowband integrated board and
that the process of setting the switching device matrix on the broadband-narrowband integrated board comprises:
setting a first switching device connected to a user terminal, and respectively connecting a normally open contact and a normally closed contact of the first switching device to the broadband outgoing test bus and a normally closed contact of a second switching device;
setting the second switching device connected to the broadband interface, and connecting a normally open contact of the second switching device to the narrowband ingoing test bus;
setting a third switching device connected to the broadband ingoing test bus, and respectively connecting a normally open contact and a normally closed contact of the third switching device to the test bus and the broadband outgoing test bus;
setting a fourth switching device connected to a seventh switching device, and respectively connecting a normally open contact and a normally closed contact of the fourth switching device to the narrowband ingoing test bus and a subscriber line splitter and protection circuit;
setting a sixth switching device connected to the narrowband outgoing test bus, leaving a normally open contact of the sixth switching device unconnected and connecting a normally closed contact of the sixth switching device to the broadband outgoing test bus;
setting the seventh switching device connected to the fourth switching device, and respectively connecting a normally open contact and a normally closed contact of the seventh switching device to the narrowband ingoing test bus and a subscriber line interface circuit;
setting an eighth switching device connected to the broadband outgoing test bus, connecting a normally open contact of the eighth switching device to the test device and leaving a normally closed contact of the eighth switching device unconnected;
setting a measuring splitter and protection circuit, and respectively connecting a user end and a network end of the measuring splitter and protection circuit to the broadband ingoing test bus and the narrowband ingoing test bus.

5. The method of Claim 4, wherein in the case that the service signal to be tested is a broadband uplink signal, connecting the test bus to the subscriber line so as to make the service signal to be tested enter the test bus comprises:
making the first switching device, the eighth switching device and the fourth switching device turn to normally open positions and thus making:
the broadband uplink signal enter the test device through the broadband outgoing test bus;
the network end and the user end of the measuring splitter and protection circuit be respectively connected to the narrowband ingoing test bus and the broadband outgoing test bus;
the narrowband ingoing test bus be connected to the subscriber line interface circuit.

6. The method of Claim 4, wherein in the case that the service signal to be tested is a broadband downlink signal, connecting the test bus to the subscriber line so as to make the service signal to be tested enter the test bus comprises:
making the second switching device and the third switching device turn to normally open positions and thus making:
the broadband downlink signal enter the test device through the broadband ingoing test bus;
the narrowband service be performed continuously through a narrowband service path in normal operation.

7. The method of Claim 4, wherein in the case that the service signal to be tested is a broadband uplink signal after the narrowband service is interrupted, connecting the test bus to the subscriber line so as to make the service signal to be tested enter the test bus comprises:
making the first switching device, the third switching device, the sixth switching device and the eighth switching device turn to normally open positions and thus making:
the broadband uplink signal enter the test device through the broadband outgoing test bus.

8. The method of Claim 4, wherein in the case that the service signal to be tested is a narrowband uplink signal, connecting the test bus to the subscriber line so as to make the service signal to be tested enter the test bus comprises:
making the eighth switching device and the seventh switching device turn to normally open positions and thus making:
the narrowband outgoing test bus be connected to the broadband outgoing test bus;
the narrowband uplink signal enter the test device through the narrowband outgoing test bus and the broadband outgoing test bus;
the broadband service be performed continuously through a broadband service path in normal operation.

9. The method of Claim 4, wherein in the case that the service signal to be tested is a narrowband downlink signal, connecting the test bus to the subscriber line so as to make the service signal to be tested enter the test bus comprises:
making the third switching device and the fourth switching device turn to normally open positions and thus making:
the user end and network end of the measuring splitter and protection circuit be respectively connected to the broadband ingoing test bus and the narrowband ingoing test bus;
the subscriber line interface circuit be connected to the narrowband ingoing test bus so that the narrowband downlink signal enters the test device through the narrowband ingoing test bus, the measuring splitter and protection circuit and the broadband ingoing test bus.
the broadband service be performed continuously through a broadband service path of normal operation.

10. The method of Claim 4, wherein setting the switching device matrix on the broadband-narrowband integrated board further comprises:
setting a fifth switching device connected to the user end of the measuring splitter and protection circuit, connecting a normally open contact of the fifth switching device to the broadband outgoing test bus and leaving a normally closed contact of the fifth switching device unconnected; and
wherein in the case that the service signal to be tested contains a broadband downlink signal and a broadband uplink signal, connecting the test bus to the subscriber line so as to make the service signal to be tested enter the test bus comprises:
making the first switching device, the second switching device, the third switching device, the fifth switching device and the eighth switching device turn to normally open positions and thus making:
the broadband uplink signal and the broadband downlink signal enter the test device respectively through the broadband outgoing test bus and the broadband ingoing test bus;
the user end and network end of the measuring splitter and protection circuit be respectively connected to the broadband outgoing test bus and the narrowband ingoing test bus;
the subscriber line interface circuit be connected to the narrowband ingoing test bus so as to form a narrowband service path.

11. The method of Claim 4, further comprising:
when the broadband interface of an original subscriber line malfunctions, using the broadband interface of a backup subscriber line to provide the broadband service to the original subscriber line.

12. The method of Claim 11, wherein using the broadband interface of the backup subscriber line to provide the broadband service to the original subscriber line comprises:
making the first switching device of the original subscriber line, the second switching device of the backup subscriber line and the fourth switching device of the original subscriber line turn to normally open positions and thus making:
the broadband interface of the backup subscriber line be connected to the broadband ingoing test bus, the user terminal of the original subscriber line be connected to the broadband outgoing test bus, the broadband ingoing test bus be connected to the broadband outgoing test bus, so as to form a new broadband service path;
the user end and network end of the measuring splitter and protection circuit be respectively connected to the broadband ingoing test bus and the narrowband ingoing test bus, the subscriber line interface circuit of the original subscriber line be connected to the narrowband ingoing test bus, so as to form a new narrowband service path.

## Patentansprüche

1. Integrierte Breitband-Schmalband-Karte, die Folgendes umfasst:
einen Testbus, um ein Dienstsignal mit einer Testvorrichtung zu verbinden; und
eine Schaltvorrichtungsmatrix, um den Testbus mit einer Teilnehmerleitung zu verbinden, um zu bewirken, dass ein zu testendes Dienstsignal, das entweder ein Breitbandsignal oder ein Schmalbandsignal ist, in den Testbus eingegeben wird,
**dadurch gekennzeichnet, dass**
der Testbus Folgendes umfasst:
einen ausgehenden Breitband-Testbus, einen eingehenden Breitband-Testbus, einen ausgehenden Schmalband-Testbus und einen eingehenden Schmalband-Testbus, und dass die Schaltvorrichtungsmatrix Folgendes umfasst:
eine erste Schaltvorrichtung (KOA), die mit einem Anwenderendgerät verbunden ist und von der ein normalerweise offener Kontakt mit dem ausgehenden Breitband-Testbus verbunden ist und ein normalerweise geschlossener Kontakt mit einem normalerweise geschlossenen Kontakt einer zweiten Schaltvorrichtung (KIA) verbunden ist;
die zweite Schaltvorrichtung (KIA), die mit einer Breitband-Schnittstelle verbunden ist und von der ein normalerweise offener Kontakt mit dem eingehenden Breitband-Testbus verbunden ist;
eine dritte Schaltvorrichtung (K3), die mit dem eingehenden Breitband-Testbus verbunden ist und von der ein normalerweise offener Kontakt mit der Testvorrichtung verbunden ist und ein normalerweise geschlossener Kontakt mit dem ausgehenden Breitband-Testbus verbunden ist;
eine vierte Schaltvorrichtung, die mit einer siebenten Schaltvorrichtung verbunden ist und von der ein normalerweise offener Kontakt mit dem eingehenden Schmalband-Testbus verbunden ist und ein normalerweise geschlossener Kontakt mit einer Teilnehmerleitungs-Splitter- und Schutzschaltung verbunden ist;
eine sechste Schaltvorrichtung (K1), die mit dem ausgehenden Schmalband-Testbus verbunden ist und von der ein normalerweise offener Kontakt nicht angeschlossen ist und ein normalerweise geschlossener Kontakt mit dem ausgehenden Breitband-Testbus verbunden ist;
die siebente Schaltvorrichtung, von der ein normalerweise offener Kontakt mit dem ausgehenden Schmalband-Testbus verbunden ist und ein normalerweise geschlossener Kontakt mit einer Teilnehmerleitungs-Schnittstellenschaltung verbunden ist;
eine achte Schaltvorrichtung (K2), die mit dem ausgehenden Breitband-Testbus verbunden ist und von der ein normalerweise offener Kontakt mit der Testvorrichtung verbunden ist und ein normalerweise geschlossener Kontakt nicht angeschlossen ist;
eine Messsplitter- und Schutzschaltung, von der ein Anwenderende mit dem eingehenden Breitband-Testbus verbunden ist und ein Netzende mit dem eingehenden Schmalband-Testbus verbunden ist.

2. Integrierte Breitband-Schmalband-Karte nach Anspruch 1, die ferner Folgendes umfasst:
eine fünfte Schaltvorrichtung, die mit dem Anwenderende der Messsplitter- und Schutzschaltung verbunden ist und von der ein normalerweise offener Kontakt mit dem ausgehenden Breitband-Testbus verbunden ist und ein normalerweise geschlossener Kontakt nicht angeschlossen ist.

3. Integrierte Breitband-Schmalband-Karte nach Anspruch 1 oder 2, wobei die vierte Schaltvorrichtung und die siebte Schaltvorrichtung als ein Halbleiterrelais integriert sind.

4. Verfahren zum Testen einer integrierten Breitband-Schmalband-Karte, das Folgendes umfasst:
Setzen eines Testbusses und einer Schaltvorrichtungsmatrix auf der integrierten Breitband-Schmalband-Karte;
wahlweises Verbinden des Testbusses mit einer Teilnehmerleitung unter Verwendung der Schaltvorrichtungsmatrix, um zu bewirken, dass ein zu testendes Dienstsignal, das entweder ein Breitbandsignal oder ein Schmalbandsignal ist, in den Testbus eingegeben wird; und
Testen des zu testenden Signals durch den Testbus,
**dadurch gekennzeichnet, dass**
der Prozess des Setzens des Testbusses auf der integrierten Breitband-Schmalband-Karte Folgendes umfasst:
Setzen eines ausgehenden Breitband-Testbusses, eines eingehenden Breitband-Testbusses, eines ausgehenden Schmalband-Testbusses und eines eingehenden Schmalband-Testbusses auf der integrierten Breitband-Schmalband-Karte, und
dass der Prozess des Setzens der Schaltvorrichtungsmatrix auf der integrierten Breitband-Schmalband-Karte Folgendes umfasst:
Setzen einer ersten Schaltvorrichtung, die mit einem Anwenderendgerät verbunden ist, und Verbinden eines normalerweise offenen Kontakts und eines normalerweise geschlossenen Kontakts der ersten Schaltvorrichtung mit dem ausgehenden Breitband-Testbus bzw. mit einem normalerweise geschlossenen Kontakt einer zweiten Schaltvorrichtung;
Setzen der zweiten Schaltvorrichtung, die mit der Breitband-Schnittstelle verbunden ist, und Verbinden eines normalerweise offenen Kontakts der zweiten Schaltvorrichtung mit dem eingehenden Schmalband-Testbus;
Setzen einer dritten Schaltvorrichtung, die mit dem eingehenden Breitband-Testbus verbunden ist, und Verbinden eines normalerweise offenen Kontakts und eines normalerweise geschlossenen Kontakts der dritten Schaltvorrichtung mit dem Testbus bzw. mit dem ausgehenden Breitband-Testbus;
Setzen einer vierten Schaltvorrichtung, die mit einer siebenten Schaltvorrichtung verbunden ist, und Verbinden eines normalerweise offenen Kontakts und eines normalerweise geschlossenen Kontakts der vierten Schaltvorrichtung mit dem eingehenden Schmalband-Testbus bzw. mit einer Teilnehmerleitungs-Splitter- und Schutzschaltung;
Setzen einer sechsten Schaltvorrichtung, die mit dem ausgehenden Schmalband-Testbus verbunden ist, und Nicht-angeschlossen-Lassen eines normalerweise offenen Kontakts der sechsten Schaltvorrichtung und Verbinden eines normalerweise geschlossenen Kontakts der sechsten Schaltvorrichtung mit dem ausgehenden Breitband-Testbus;
Setzen der siebenten Schaltvorrichtung, die mit der vierten Schaltvorrichtung verbunden ist, und Verbinden eines normalerweise offenen Kontakts und eines normalerweise geschlossenen Kontakts der siebenten Schaltvorrichtung mit dem eingehenden Schmalband-Testbus bzw. mit einer Teilnehmerleitungs-Schnittstellenschaltung;
Setzen einer achten Schaltvorrichtung, die mit dem ausgehenden Breitband-Testbus verbunden ist, und Verbinden eines normalerweise offenen Kontakts der achten Schaltvorrichtung mit der Testvorrichtung und Nicht-angeschlossen-Lassen eines normalerweise geschlossenen Kontakts der achten Schaltvorrichtung;
Setzen einer Messsplitter- und Schutzschaltung und Verbinden eines Anwenderendes und eines Netzendes der Messsplitter- und Schutzschaltung mit dem eingehenden Breitband-Testbus bzw. mit dem eingehenden Schmalband-Testbus.

5. Verfahren nach Anspruch 4, wobei in dem Fall, in dem das zu testende Dienstsignal ein Breitband-Aufwärtsstreckensignal ist, das Verbinden des Testbusses mit der Teilnehmerleitung, um zu bewirken, dass das zu testende Dienstsignal in den Testbus eingegeben wird, Folgendes umfasst:
Bewirken, dass die erste Schaltvorrichtung, die achte Schaltvorrichtung und die vierte Schaltvorrichtung in die normalerweise offenen Positionen gehen und folglich bewirken: dass
das Breitband-Aufwärtsstreckensignal durch den ausgehenden Breitband-Testbus in die Testvorrichtung eingegeben wird;
das Netzende und das Anwenderende der Messsplitter- und Schutzschaltung mit dem eingehenden Schmalband-Testbus bzw. mit dem ausgehenden Breitband-Testbus verbunden werden; und
der eingehende Schmalband-Testbus mit der Teilnehmerleitungs-Schnittstellenschaltung verbunden wird.

6. Verfahren nach Anspruch 4, wobei in dem Fall, in dem das zu testende Dienstsignal ein Breitband-Abwärtsstreckensignal ist, das Verbinden des Testbusses mit der Teilnehmerleitung, um zu bewirken, dass das zu testende Dienstsignal in den Testbus eingegeben wird, Folgendes umfasst:
Bewirken, dass die zweite Schaltvorrichtung und die dritte Schaltvorrichtung in die normalerweise offenen Positionen gehen und folglich bewirken: dass das Breitband-Abwärtsstreckensignal durch den eingehenden Breitband-Testbus in die Testvorrichtung eingegeben wird; und
der Schmalbanddienst durch einen Schmalband-Dienstweg im Normalbetrieb kontinuierlich ausgeführt wird.

7. Verfahren nach Anspruch 4, wobei in dem Fall, in dem das zu testende Dienstsignal ein Breitband-Aufwärtsstreckensignal ist, nachdem der Schmalbanddienst unterbrochen worden ist, das Verbinden des Testbusses mit der Teilnehmerleitung, um zu bewirken, dass das zu testende Dienstsignal in den Testbus eingegeben wird, Folgendes umfasst:
Bewirken, dass die erste Schaltvorrichtung, die dritte Schaltvorrichtung, die sechste Schaltvorrichtung und die achte Schaltvorrichtung in die normalerweise offenen Positionen gehen und folglich bewirken: dass
das Breitband-Aufwärtsstreckensignal durch den ausgehenden Breitband-Testbus in die Testvorrichtung eingegeben wird.

8. Verfahren nach Anspruch 4, wobei in dem Fall, in dem das zu testende Dienstsignal ein Schmalband-Aufwärtsstreckensignal ist, das Verbinden des Testbusses mit der Teilnehmerleitung, um zu bewirken, dass das zu testende Dienstsignal in den Testbus eingegeben wird, Folgendes umfasst:
Bewirken, dass die achte Schaltvorrichtung und die siebente Schaltvorrichtung in die normalerweise offenen Positionen gehen und folglich bewirken: dass der ausgehende Schmalband-Testbus mit dem ausgehenden Breitband-Testbus verbunden wird;
das Schmalband-Aufwärtsstreckensignal durch den ausgehenden Schmalband-Testbus und den ausgehenden Breitband-Testbus in die Testvorrichtung eingegeben wird; und
der Breitbanddienst durch einen Breitband-Dienstweg im Normalbetrieb kontinuierlich ausgeführt wird.

9. Verfahren nach Anspruch 4, wobei in dem Fall, in dem das zu testende Dienstsignal ein Schmalband-Abwärtsstreckensignal ist, das Verbinden des Testbusses mit der Teilnehmerleitung, um zu bewirken, dass das zu testende Dienstsignal in den Testbus eingegeben wird, Folgendes umfasst:
Bewirken, dass die dritte Schaltvorrichtung und die vierte Schaltvorrichtung in die normalerweise offenen Positionen gehen und folglich bewirken: dass das Anwenderende und das Netzende der Messsplitter- und Schutzschaltung mit dem eingehenden Breitband-Testbus bzw. mit dem eingehenden Schmalband-Testbus verbunden werden;
die Teilnehmerleitungs-Schnittstellenschaltung mit dem eingehenden Schmalband-Testbus verbunden wird, so dass das Schmalband-Abwärtsstreckensignal durch den eingehenden Schmalband-Testbus, die Messsplitter- und Schutzschaltung und den eingehenden Breitband-Testbus in die Testvorrichtung eingegeben wird; und
der Breitbanddienst durch einen Breitband-Dienstweg des Normalbetriebs kontinuierlich ausgeführt wird.

10. Verfahren nach Anspruch 4, wobei das Setzen der Schaltvorrichtungsmatrix auf der integrierten Breitband-Schmalband-Karte ferner Folgendes umfasst:
Setzen einer fünften Schaltvorrichtung, die mit dem Anwenderende der Messsplitter - und Schutzschaltung verbunden ist, und Verbinden eines normalerweise offenen Kontakts der fünften Schaltvorrichtung mit dem ausgehenden Breitband-Testbus und
Nicht-angeschlossen-Lassen eines normalerweise geschlossenen Kontakts der fünften Schaltvorrichtung; und
wobei in dem Fall, in dem das zu testende Dienstsignal ein Breitband-Abwärtsstreckensignal und ein Breitband-Aufwärtsstreckensignal enthält, das Verbinden des Testbusses mit der Teilnehmerleitung, um zu bewirken, dass das zu testende Dienstsignal in den Testbus eingegeben wird, Folgendes umfasst:
Bewirken, dass die erste Schaltvorrichtung, die zweite Schaltvorrichtung, die dritte Schaltvorrichtung, die fünfte Schaltvorrichtung und die achte Schaltvorrichtung in die normalerweise offenen Positionen gehen und folglich bewirken: dass das Breitband-Aufwärtsstreckensignal und das Breitband-Abwärtsstreckensignal durch den ausgehenden Breitband-Testbus bzw. durch den eingehenden Breitband-Testbus in die Testvorrichtung eingegeben werden;
das Anwenderende und das Netzende der Messsplitter- und Schutzschaltung mit dem ausgehenden Breitband-Testbus bzw. mit dem eingehenden Schmalband-Testbus verbunden werden; und
die Teilnehmerleitungs-Schnittstellenschaltung mit dem eingehenden Schmalband-Testbus verbunden wird, um einen Schmalband-Dienstweg zu bilden.

11. Verfahren nach Anspruch 4, das ferner Folgendes umfasst:
wenn die Breitband-Schnittstelle einer ursprünglichen Teilnehmerleitung ausfällt, Verwenden der Breitbandschnittstelle einer Sicherungs-Teilnehmerleitung, um der ursprünglichen Teilnehmerleitung den Breitbanddienst bereitzustellen.

12. Verfahren nach Anspruch 11, wobei das Verwenden der Breitbandschnittstelle der Sicherungs-Teilnehmerleitung, um der ursprünglichen Teilnehmerleitung den Breitbanddienst bereitzustellen, Folgendes umfasst:
Bewirken, dass die erste Schaltvorrichtung der ursprünglichen Teilnehmerleitung, die zweite Schaltvorrichtung der Sicherungs-Teilnehmerleitung und die vierte Schaltvorrichtung der ursprünglichen Teilnehmerleitung in die normalerweise offenen Positionen gehen und folglich bewirken: dass
die Breitbandschnittstelle der Sicherungs-Teilnehmerleitung mit dem eingehenden Breitband-Testbus verbunden wird, das Anwenderendgerät der ursprünglichen Teilnehmerleitung mit dem ausgehenden Breitband-Testbus verbunden wird und der eingehende Breitband-Testbus mit dem ausgehenden Breitband-Testbus verbunden wird, um einen neuen Breitband-Dienstweg zu bilden; und
das Anwenderende und das Netzende der Messsplitter- und Schutzschaltung mit dem eingehenden Breitband-Testbus bzw. mit dem eingehenden Schmalband-Testbus verbunden werden und die Teilnehmerleitungs-Schnittstellenschaltung der ursprünglichen Teilnehmerleitung mit dem eingehenden Schmalband-Testbus verbunden wird, um einen neuen Schmalband-Dienstweg zu bilden.

## Revendications

1. Carte intégrée à large bande-bande étroite, comprenant :
un bus de test destiné à connecter un signal de service à un dispositif de test ; et
une matrice de dispositifs de commutation destinée à connecter le bus de test à une ligne d'abonné afin de faire en sorte qu'un signal de service, qui est soit un signal à large bande, soit un signal à bande étroite, à tester pénètre dans le bus de test
**caractérisée en ce que**
le bus de test comprend :
un bus de test de sortie à large bande, un bus de test d'entrée à large bande, un bus de test de sortie à bande étroite et un bus de test d'entrée à bande étroite, et **en ce que** la matrice de dispositifs de commutation comprend :
un premier dispositif de commutation (KOA) connecté à un terminal utilisateur, un contact normalement ouvert de celui-ci étant connecté au bus de test de sortie à large bande et un contact normalement fermé de celui-ci étant connecté à un contact normalement fermé d'un deuxième dispositif de commutation (KIA) ;
le deuxième dispositif de commutation (KIA) connecté à une interface à large bande, un contact normalement ouvert de celui-ci étant connecté au bus de test d'entrée à large bande ;
un troisième dispositif de commutation (K3) connecté au bus de test d'entrée à large bande, un contact normalement ouvert de celui-ci étant connecté au dispositif de test et un contact normalement fermé de celui-ci étant connecté au bus de test de sortie à large bande ;
un quatrième dispositif de commutation connecté à un septième dispositif de commutation, un contact normalement ouvert de celui-ci étant connecté au bus de test d'entrée à bande étroite et un contact normalement fermé de celui-ci étant connecté à un circuit de séparation et de protection de ligne d'abonné;
un sixième dispositif de commutation (K1) connecté au bus de test de sortie à bande étroite, un contact normalement ouvert de celui-ci n'étant pas connecté et un contact normalement fermé de celui-ci étant connecté au bus de test de sortie à large bande ;
le septième dispositif de commutation, un contact normalement ouvert de celui-ci étant connecté au bus de test de sortie à bande étroite et un contact normalement fermé de celui-ci étant connecté à un circuit d'interface de ligne d'abonné ;
un huitième dispositif de commutation (K2) connecté au bus de test de sortie à large bande, un contact normalement ouvert de celui-ci étant connecté au dispositif de test et un contact normalement fermé de celui-ci n'étant pas connecté ;
un circuit de séparation et de protection de mesure, une extrémité utilisateur de celui-ci étant connectée au bus de test d'entrée à large bande et une extrémité réseau de celui-ci étant connectée au bus de test d'entrée à bande étroite.

2. Carte intégrée à large bande-bande étroite selon la revendication 1, comprenant en outre :
un cinquième dispositif de commutation connecté à l'extrémité utilisateur du circuit de séparation et de protection de mesure, un contact normalement ouvert de celui-ci étant connecté au bus de test de sortie à large bande et un contact normalement fermé de celui-ci n'étant pas connecté.

3. Carte intégrée à large bande-bande étroite selon la revendication 1 ou 2, dans laquelle le quatrième dispositif de commutation et le septième dispositif de commutation sont intégrés sous la forme d'un relais monolithique.

4. Procédé de test d'une carte intégrée à large bande-bande étroite, comprenant :
la mise en place d'un bus de test et d'une matrice de dispositifs de commutation sur la carte intégrée à large bande-bande étroite ;
la connexion sélective du bus de test à une ligne d'abonné en utilisant la matrice de dispositifs de commutation de manière à faire en sorte qu'un signal de service, qui est soit un signal à large bande, soit un signal à bande étroite, à tester pénètre dans le bus de test ; et
le test du signal à tester au moyen du bus de test,
**caractérisé en ce que**
le processus de mise en place du bus de test sur la carte intégrée à large bande-bande étroite comprend :
la mise en place d'un bus de test de sortie à large bande, d'un bus de test d'entrée à large bande, d'un bus de test de sortie à bande étroite et d'un bus de test d'entrée à bande étroite sur la carte intégrée à large bande-bande étroite ; et
**en ce que** le processus de mise en place de la matrice de dispositifs de commutation sur la carte intégrée à large bande-bande étroite comprend :
la mise en place d'un premier dispositif de commutation connecté à un terminal utilisateur, et la connexion respective d'un contact normalement ouvert et d'un contact normalement fermé du premier dispositif de commutation au bus de test de sortie à large bande et à un contact normalement fermé d'un deuxième dispositif de commutation ;
la mise en place du deuxième dispositif de commutation connecté à l'interface à large bande, et la connexion d'un contact normalement ouvert du deuxième dispositif de commutation au bus de test d'entrée à bande étroite ;
la mise en place d'un troisième dispositif de commutation connecté au bus de test d'entrée à large bande, et la connexion respective d'un contact normalement ouvert et d'un contact normalement fermé du troisième dispositif de commutation au bus de test et au bus de test de sortie à large bande ;
la mise en place d'un quatrième dispositif de commutation connecté à un septième dispositif de commutation, et la connexion respective d'un contact normalement ouvert et d'un contact normalement fermé du quatrième dispositif de commutation au bus de test d'entrée à bande étroite et à un circuit de séparation et de protection de ligne d'abonné ;
la mise en place d'un sixième dispositif de commutation connecté au bus de test de sortie à bande étroite, le fait de laisser non connecté un contact normalement ouvert du sixième dispositif de commutation et la connexion d'un contact normalement fermé du sixième dispositif de commutation au bus de test de sortie à large bande ;
la mise en place du septième dispositif de commutation connecté au quatrième dispositif de commutation, et la connexion respective d'un contact normalement ouvert et d'un contact normalement fermé du septième dispositif de commutation au bus de test d'entrée à bande étroite et à un circuit d'interface de ligne d'abonné ;
la mise en place d'un huitième dispositif de commutation connecté au bus de test de sortie à large bande, la connexion d'un contact normalement ouvert du huitième dispositif de commutation au dispositif de test et le fait de laisser non connecté un contact normalement fermé du huitième dispositif de commutation ;
la mise en place d'un circuit de séparation et de protection de mesure, et la connexion respective d'une extrémité utilisateur et d'une extrémité réseau du circuit de séparation et de protection de mesure au bus de test d'entrée à large bande et au bus de test d'entrée à bande étroite.

5. Procédé selon la revendication 4, dans lequel, dans le cas où le signal de service à tester est un signal de liaison montante à large bande, la connexion du bus de test à la ligne d'abonné afin de faire en sorte que le signal de service à tester pénètre dans le bus de test comprend :
le fait de faire en sorte que le premier dispositif de commutation, le huitième dispositif de commutation et le quatrième dispositif de commutation passent à des positions normalement ouvertes et le fait de faire ainsi en sorte :
que le signal de liaison montante à large bande pénètre dans le dispositif de test par l'intermédiaire du bus de test de sortie à large bande ;
que l'extrémité réseau et l'extrémité utilisateur du circuit de séparation et de protection de mesure soient respectivement connectées au bus de test d'entrée à bande étroite et au bus de test de sortie à large bande ;
que le bus de test d'entrée à bande étroite soit connecté au circuit d'interface de ligne d'abonné.

6. Procédé selon la revendication 4, dans lequel, dans le cas où le signal de service à tester est un signal de liaison descendante à large bande, la connexion du bus de test à la ligne d'abonné afin de faire en sorte que le signal de service à tester pénètre dans le bus de test comprend :
le fait de faire en sorte que le deuxième dispositif de commutation et le troisième dispositif de commutation passent à des positions normalement ouvertes et le fait de faire ainsi en sorte :
que le signal de liaison descendante à large bande pénètre dans le dispositif de test par l'intermédiaire du bus de test d'entrée à large bande ;
que le service à bande étroite soit exécuté en continu par l'intermédiaire d'un trajet de service à bande étroite en fonctionnement normal.

7. Procédé selon la revendication 4, dans lequel, dans le cas où le signal de service à tester est un signal de liaison montante à large bande après que le service à bande étroite a été interrompu, la connexion du bus de test à la ligne d'abonné afin de faire en sorte que le signal de service à tester pénètre dans le bus de test comprend :
le fait de faire en sorte que le premier dispositif de commutation, le troisième dispositif de commutation, le sixième dispositif de commutation et le huitième dispositif de commutation passent à des positions normalement ouvertes et le fait de faire ainsi en sorte :
que le signal de liaison montante à large bande pénètre dans le dispositif de test par l'intermédiaire du bus de test de sortie à large bande.

8. Procédé selon la revendication 4, dans lequel, dans le cas où le signal de service à tester est un signal de liaison montante à bande étroite, la connexion du bus de test à la ligne d'abonné afin de faire en sorte que le signal de service à tester pénètre dans le bus de test comprend :
le fait de faire en sorte que le huitième dispositif de commutation et le septième dispositif de commutation passent à des positions normalement ouvertes et le fait de faire ainsi en sorte :
que le bus de test de sortie à bande étroite soit connecté au bus de test de sortie à large bande ;
que le signal de liaison montante à bande étroite pénètre dans le dispositif de test par l'intermédiaire du bus de test de sortie à bande étroite et du bus de test de sortie à large bande ;
que le service à large bande soit exécuté en continu par l'intermédiaire d'un trajet de service à large bande en fonctionnement normal.

9. Procédé selon la revendication 4, dans lequel, dans le cas où le signal de service à tester est un signal de liaison descendante à bande étroite, la connexion du bus de test à la ligne d'abonné afin de faire en sorte que le signal de service à tester pénètre dans le bus de test comprend :
le fait de faire en sorte que le troisième dispositif de commutation et le quatrième dispositif de commutation passent à des positions normalement ouvertes et le fait de faire ainsi en sorte :
que l'extrémité utilisateur et l'extrémité réseau du circuit de séparation et de protection de mesure soient respectivement connectées au bus de test d'entrée à large bande et au bus de test d'entrée à bande étroite ;
que le circuit d'interface de ligne d'abonné soit connecté au bus de test d'entrée à bande étroite afin que le signal de liaison descendante à bande étroite pénètre dans le dispositif de test par l'intermédiaire du bus de test d'entrée à bande étroite, du circuit de séparation et de protection de mesure et du bus de test d'entrée à large bande,
que le service à large bande soit exécuté en continu par l'intermédiaire d'un trajet de service à large bande en fonctionnement normal.

10. Procédé selon la revendication 4, dans lequel la mise en place de la matrice de dispositifs de commutation sur la carte intégrée à large bande-bande étroite comprend en outre :
la mise en place d'un cinquième dispositif de commutation connecté à l'extrémité utilisateur du circuit de séparation et de protection de mesure, la connexion d'un contact normalement ouvert du cinquième dispositif de commutation au bus de test de sortie à large bande et le fait de laisser non connecté un contact normalement fermé du cinquième dispositif de commutation ; et
dans lequel, dans le cas où le signal de service à tester contient un signal de liaison descendante à large bande et un signal de liaison montante à large bande, la connexion du bus de test à la ligne d'abonné afin de faire en sorte que le signal de service à tester pénètre dans le bus de test comprend :
le fait de faire en sorte que le premier dispositif de commutation, le deuxième dispositif de commutation, le troisième dispositif de commutation, le cinquième dispositif de commutation et le huitième dispositif de commutation passent à des positions normalement ouvertes et le fait de faire ainsi en sorte :
que le signal de liaison montante à large bande et le signal de liaison descendante à large bande pénètrent respectivement dans le dispositif de test par l'intermédiaire du bus de test de sortie à large bande et du bus de test d'entrée à large bande ;
que l'extrémité utilisateur et l'extrémité réseau du circuit de séparation et de protection de mesure soient respectivement connectées au bus de test de sortie à large bande et au bus de test d'entrée à bande étroite ;
que le circuit d'interface de ligne d'abonné soit connecté au bus de test d'entrée à bande étroite afin de former un trajet de service à bande étroite.

11. Procédé selon la revendication 4, comprenant en outre :
lorsque l'interface à large bande d'une ligne d'abonné d'origine présente un défaut de fonctionnement, l'utilisation de l'interface à large bande d'une ligne d'abonné de secours pour fournir le service à large bande à la ligne d'abonné d'origine.

12. Procédé selon la revendication 11, dans lequel l'utilisation de l'interface à large bande de la ligne d'abonné de secours pour fournir le service à large bande à la ligne d'abonné d'origine comprend :
le fait de faire en sorte que le premier dispositif de commutation de la ligne d'abonné d'origine, le deuxième dispositif de commutation de la ligne d'abonné de secours, et
le quatrième dispositif de commutation de la ligne d'abonné d'origine passent à des positions normalement ouvertes et le fait de faire ainsi en sorte :
que l'interface à large bande de la ligne d'abonné de secours soit connectée au bus de test d'entrée à large bande, que le terminal utilisateur de la ligne d'abonné d'origine soit connecté au bus de test de sortie à large bande, que le bus de test d'entrée à large bande soit connecté au bus de test de sortie à large bande, afin de former un nouveau trajet de service à large bande ;
que l'extrémité utilisateur et l'extrémité réseau du circuit de séparation et de protection de mesure soient respectivement connectées au bus de test d'entrée à large bande et au bus de test d'entrée à bande étroite, que le circuit d'interface de ligne d'abonné de la ligne d'abonné d'origine soit connecté au bus de test d'entrée à bande étroite, afin de former un nouveau trajet de service à bande étroite.
